# FASCICULE DE BREVET EUROPEEN

(11) **EP 2 193 529 B1**
(45) Date de publication et mention de la délivrance du brevet: **01.11.2017**
(21) Numéro de dépôt: 08840715.0
(22) Date de dépôt: 22.09.2008
(51) Int. Cl.: H02G 3/04, H01B 9/02, H01B 11/10

(54) **GAINE DE PROTECTION A L'EGARD DU RAYONNEMENT, NOTAMMENT DU CHAMP ELECTRIQUE ENGENDRE PAR DES CABLES ELECTRIQUES**
SCHUTZHÜLLE GEGEN STRAHLUNG, INSBESONDERE GEGEN STRAHLUNG AUS DEM VON ELEKTRISCHEN KABELN ERZEUGTEN ELEKTRISCHEN FELD
SHEATH PROVIDING PROTECTION AGAINST RADIATION, IN PARTICULAR FROM THE ELECTRIC FIELD GENERATED BY ELECTRIC CABLES

(30) Priorité: 25.09.2007 FR 0757840
(43) Date de publication de la demande: 09.06.2010
(73) Titulaire: Aumoitte, Christian, 78920 Ecquevilly (FR)
(72) Inventeur: AUMOITTE, Christian, F-78920 Ecquevilly (FR)
(74) Mandataire: IP Trust
(86) Numéro de dépôt international: PCT/FR2008/051692
(87) Numéro de publication internationale: WO 2009/050359

(56) Documents cités:
- WO-A-2006/016048
- DE-U1- 8 621 216
- US-A- 4 461 923
- US-A1- 2002 155 738

## Description

La présente invention concerne une gaine de protection à l'égard du rayonnement du champ électrique engendré par des câbles électriques s'étendant à l'intérieur de la gaine, au sens du type ICTA ou ICTL.

On connaît des câbles dits « blindés » qui sont utilisés pour transmettre des signaux de télécommunication haute fréquence, soit au moyen d'un conducteur en cuivre, soit au moyen d'une fibre optique, etc. Le blindage est généralement réalisé au moyen d'une tresse en fil métallique conducteur qui est séparée du fil conducteur ou de la fibre optique par une couche en matière plastique isolante, et est entourée extérieurement par une autre couche en matière plastique isolante.

Actuellement, on utilise couramment dans le bâtiment des gaines de protection, dites gaines ICTA, ICTL, ... dont la surface extérieure est lisse ou annelée pour leur donner une certaine flexibilité tout en renforçant leur résistance à l'écrasement. Ces gaines ne présentent pas de blindage contre les rayonnements et notamment, contre les champs électriques.

Ces gaines de protection reçoivent plusieurs câbles électriques, généralement un câble de neutre, un câble de terre et un câble de phase reliés au réseau de distribution électrique dont la fréquence est habituellement de 50 Hz. Elles peuvent également recevoir des câbles de télécommunication utilisés pour transmettre des signaux de télécommunication.

Les câbles sont destinés à alimenter électriquement divers appareils ou prises électriques.

Ces câbles génèrent un champ électrique qui peut perturber certains appareils, ou certains signaux de télécommunication, voire même être à l'origine de problème de santé.

La Demanderesse a créé et décrit dans le WO 2006/016048 une gaine de protection à l'égard du rayonnement, notamment du champ électrique, engendré par des câbles électriques du type ci-dessus.

La gaine décrite dans le document ci-dessus comprend une couche extérieure en matière électriquement isolante qui recouvre une couche intérieure en matière électriquement conductrice. L'extrémité de la gaine comporte des moyens de connexion amovibles pour raccorder la couche en matière électriquement conductrice à un conducteur électrique destiné à être relié à la terre, ladite gaine entourant ou étant destinée à entourer au moins un câble de neutre, un câble de terre et un câble de phase reliés au réseau de distribution électrique.

La couche électriquement conductrice reliée à la terre atténue très fortement les rayonnements vers l'extérieur du champ électrique généré par les câbles s'étendant à l'intérieur de la gaine.

Le but de la présente invention est d'apporter des améliorations à la gaine de protection décrite ci-dessus.

Ce but est atteint selon l'invention par une gaine de protection à l'égard du rayonnement du champ électrique ayant le caractéristique de la revendication 1. La couche en matière électriquement conductrice peut être une feuille de métal conducteur s'étendant annulairement ou hélicoïdalement sous la couche extérieure isolante. Cette feuille de métal conducteur peut être une feuille d'aluminium, de mumétal, etc...

Cependant, de préférence, la couche en matière électriquement conductrice est un polymère chargé de particules conductrices.

Par particules conductrices, on entend des particules sous forme de poudre, par exemple de graphite, de fibres, de paillettes, etc.

Cette couche peut aussi être en un polymère conducteur en lui-même sans nécessiter d'inclusion dans sa matrice de particules conductrices, tel qu'il est connu des fabricants ou développeurs de polymères, dès lors que ce polymère est suffisamment conducteur pour conduire les champs électriques.

De ce fait, les différentes couches peuvent être co-extrudées.

De préférence également, la gaine est annelée extérieurement et intérieurement, ce qui lui permet d'être cintrable et facilement sécable sur mesure.

Il a été constaté, de façon surprenante, que le simple fait de placer un fil électriquement conducteur à l'intérieur de la gaine suffisait pour établir une connexion électrique entre ce fil et la couche intérieure en matière électriquement conductrice. En effet, du fait de la gravité et de la longueur de la gaine, ce fil vient en contact avec la couche ci-dessus, de façon aléatoire, au moins en plusieurs points, ce qui suffit pour réaliser la connexion électrique.

Ce moyen est beaucoup plus simple et économique que les pinces de connexion décrites dans le WO 2006/016048 de la Demanderesse, qui deviennent ainsi inutiles dans la plupart des cas.

Dans un premier exemple de réalisation de l'invention, le fil précité, relié à la terre lors de la mise en oeuvre, est un fil métallique dépourvu de gaine isolante, pour pouvoir établir un contact électrique avec la couche intérieure en matière électriquement conductrice. Ce fil pourrait être en matière plastique électriquement conductrice.

Pour garantir un meilleur contact, notamment dans le cas de tronçons de gaine de courte longueur, il est avantageux que le fil précité comporte à proximité d'au moins une des extrémités de la gaine, une pliure conformée, lors de sa mise en oeuvre, pour obtenir un contact entre le fil et la couche intérieure électriquement conductrice en au moins deux points opposés de la surface intérieure de la gaine.

Dans un autre exemple de réalisation de l'invention, le fil, relié à la terre lors de la mise en oeuvre, est un fil métallique revêtu extérieurement , tout ou partie, par une couche suffisamment conductrice pour conduire le champ électrique mais pas le courant électrique, en polymère chargé de particules conductrices. Cette couche, en venant en contact avec la couche intérieure électriquement conductrice de la gaine, permet ainsi d'établir une liaison électrique avec le fil relié à la terre. Cet exemple est également concerné par la pliure évoquée précédemment.

Le fil ci-dessus peut être le câble de terre s'étendant à l'intérieur de la gaine, mais dont le revêtement extérieur isolant est remplacé, tout ou partie, par une couche en polymère chargé de particules conductrices. Dans ce cas, le raccordement à la terre du fil de terre raccorde simultanément la couche intérieure conductrice à la terre sans avoir aucun autre raccordement à réaliser.

Ce fil peut aussi être recouvert par une couche d'un polymère d'un type conducteur en lui-même sans nécessiter d'inclusion dans sa matrice de particules conductrices, tel qu'il est connu des fabricants ou développeurs de polymères, dès lors que ce polymère est suffisamment conducteur pour conduire les champs électriques.

La gaine peut être annelée extérieurement et intérieurement pour faciliter son découpage et son cintrage. La gaine peut également être fendue sur toute sa longueur pour faciliter, dans certains cas, l'insertion des câbles.

Dans une autre version de l'invention, la gaine selon l'invention comprend en outre des moyens de connexion amovibles pour raccorder la couche en matière électriquement conductrice à un conducteur électrique destiné à être relié à la terre, ces moyens comprenant une pince conductrice pouvant s'accrocher à un anneau extérieur et/ou intérieur de la gaine pour être en contact avec la couche en matière électriquement conductrice.

Cette pince conductrice pourra être utilisée dans certains cas, par exemple dans le cas d'une gaine très courte, pour garantir une bonne connexion électrique entre la couche intérieure en matière électriquement conductrice et le fil de terre.

Selon une autre particularité de l'invention, la gaine selon l'invention comporte un manchon pour raccorder les extrémités de deux tronçons de gaine, ce manchon étant adapté pour s'engager sur les extrémités de ces deux tronçons et comportant, sur sa surface intérieure, des crans de retenue pouvant s'engager entre deux anneaux extérieurs de chacun des deux tronçons, des moyens étant en outre prévus pour établir la liaison électrique entre les couches conductrices des deux tronçons.

De préférence, lesdits moyens comprennent un conducteur souple reliant entre elles les couches conductrices des deux tronçons.

D'autres particularités et avantages de l'invention apparaîtront encore dans la description ci-après.

Aux dessins annexés, donnés à titre d'exemples non limitatifs :
- la figure 1 est une vue en coupe longitudinale d'une première version d'une gaine anti-rayonnement selon l'invention,
- la figure 2 est une vue à échelle agrandie du détail A de la figure 1,
- la figure 3 est une vue en coupe analogue à la figure 1 concernant une première amélioration de la gaine selon l'invention,
- la figure 4 est une vue analogue aux figures 1 et 3, concernant une autre version d'une gaine selon l'invention,
- la figure 5 est une vue en coupe à échelle agrandie suivant le plan V -V de la figure 4,
- la figure 6 est une vue en coupe longitudinale montrant une gaine selon l'invention dont une extrémité est équipée d'une pièce de connexion à un fil de terre,
- la figure 7 est une vue en coupe longitudinale de deux tronçons de gaine selon l'invention assemblés au moyen d'un manchon.

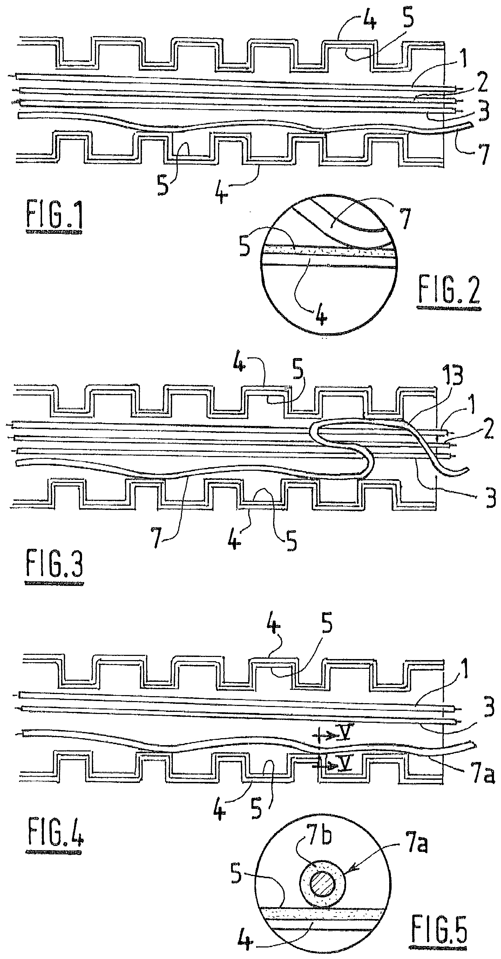

La figure 1 représente schématiquement une gaine de protection à l'égard du rayonnement du champ électrique engendré par des câbles électriques 1, 2, 3 s'étendant à l'intérieur de la gaine, ladite gaine entourant ou étant destinée à entourer au moins un câble de neutre 1, un câble de terre 2 et un câble de phase 3 reliés au réseau de distribution électrique. La gaine comprend une couche extérieure 4 en matière plastique électriquement isolante qui recouvre une couche intérieure 5 en matière électriquement conductrice.

La couche électriquement conductrice 5 peut être une feuille de métal conducteur, telle qu'une feuille d'aluminium s'étendant annulairement ou hélicoïdalement sous la couche extérieure électriquement isolante 4.

Cependant, de préférence, la couche en matière électriquement conductrice est un polymère chargé de particules conductrices.

Par particules conductrices, on entend des particules sous forme de poudre, par exemple graphite, de fibres, de paillettes, etc...

De ce fait, les différentes couches peuvent être co-extrudées.

De préférence également, la gaine est annelée extérieurement et intérieurement, ce qui lui permet d'être cintrable et facilement sécable sur mesure.

La couche isolante extérieure 4 peut être en matière plastique de même qualité que les gaines classiques utilisées actuellement dans le bâtiment, telle que du polypropylène, du polyéthylène ou du PVC.

Le diamètre extérieur de la gaine peut varier selon les gammes existant actuellement pour les gaines classiques non protégées.

La couche électriquement conductrice 5, lorsqu'elle est constituée par une feuille d'aluminium, peut être très mince : environ 1/100^{ème} de mm.

La gaine ci-dessus peut être réalisée en plusieurs étapes ou en une seule étape par surmoulage ou analogue.

La gaine pourrait être fendue dans le sens de sa longueur pour permettre ou faciliter la mise en place des câbles suivant l'application considérée.

Conformément à l'invention, le conducteur, qui est destiné à être relié à la terre, est un fil 7, tout ou partie, en matière conductrice s'étendant à l'intérieur de la gaine, sur toute la longueur de celle-ci. Ce fil 7 est en contact électrique sur au moins une partie de sa longueur avec la couche intérieure 5 en matière électriquement conductrice.

Dans l'exemple de la figure 1, le fil 7 est un fil métallique, par exemple en cuivre ou en aluminium, dépourvu de gaine isolante. Ce fil pourrait être en matière plastique électriquement conductrice.

Dans le cas de la figure 3, le fil 7 comporte, à proximité d'au moins une des extrémités de la gaine, une pliure 13 conformée lors de sa mise en oeuvre pour obtenir un contact entre le fil 7 et la couche intérieure 5 en matière électriquement conductrice en au moins deux points opposés de la surface intérieure de la gaine. Cette pliure 13 permet, si nécessaire, de garantir un contact électrique optimal entre le fil 7 et la couche 5.

Dans l'exemple de la figure 4, le fil 7a est un fil métallique revêtu extérieurement, tout ou partie, par une couche en polymère chargé de particules conductrices qui, au contact avec la couche 5 de la gaine, permet d'établir la liaison avec la terre. Dans cet exemple, le fil 7a est le câble de terre s'étendant à l'intérieur de la gaine, mais dont le revêtement extérieur isolant (voir figure 5) est remplacé, tout ou partie, par une couche 7b suffisamment conductrice pour conduire le champ électrique mais pas le courant électrique, en polymère chargé de particules conductrices. Ce fil 7a remplace le câble 2 de la figure 1.

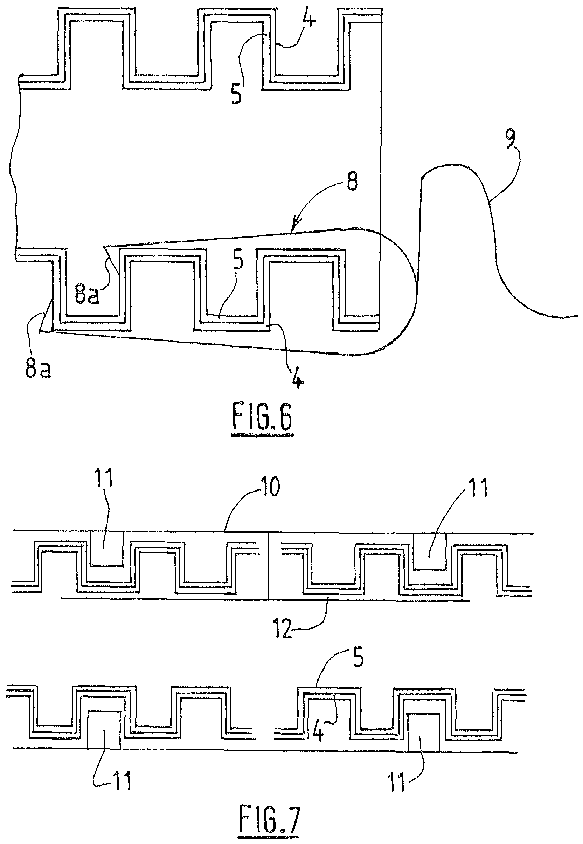

Dans l'exemple de la figure 6, on a prévu une pince conductrice 8 reliée à un conducteur 9 destiné à être relié à la terre. Cette pince 8 est adaptée pour pincer élastiquement une extrémité de la paroi de la gaine.

A cet effet, les extrémités 8a de la pince 8 sont conformées pour s'accrocher à un anneau extérieur et/ou intérieur de la gaine, pour être en contact avec la couche 5 en matière électriquement conductrice.

Une telle pince 8 peut être utilisée soit pour remplacer le fil 7 ou 7a des figures 1 à 4, soit pour compléter ou mieux garantir la liaison avec la terre, notamment dans le cas de gaines courtes dans lesquelles le fil 7 ou 7a ne permettrait pas d'assurer un contact optimal avec la couche 5.

Dans le cas de la figure 7, un manchon 10 est prévu pour raccorder les extrémités de deux tronçons de gaine. Ce manchon 10 est adapté pour s'engager sur les extrémités des deux tronçons de gaine et comporte, sur sa surface intérieure, des crans de retenue 11 pouvant s'engager entre deux anneaux extérieurs de chacun des deux tronçons.

Par ailleurs, un conducteur souple 12 relie les couches 5 en matière électriquement conductrice des deux tronçons, ce qui permet d'établir la continuité de la couche 5.

La gaine que l'on vient de décrire présente les principaux avantages suivants :
- Grâce à sa structure annelée, la gaine est souple, cintrable et facilement sécable sur mesure,
- De plus, la gaine est étanche aux liquides, notamment l'eau et la laitance du béton. Elle peut ainsi être noyée dans du béton.
- La mise en oeuvre, notamment le raccordement à la terre de la couche conductrice, est réalisée par un moyen beaucoup plus simple, rapide et économique qu'avec des pinces de connexion, telles que décrites dans le WO 2006/016048 de la Demanderesse, qui deviennent ainsi inutiles dans la plupart des cas.

La gaine, dans sa version avec une couche 5 en matière électriquement conductrice en polymère chargé de particules conductrices, peut être réalisée économiquement en polypropylène par exemple, et par co-extrusion simultanée de plusieurs couches.

Le manchon 10 représenté sur la figure 7, permet de raccorder facilement deux tronçons de gaine toute en assurant la continuité de la couche conductrice.

Dans une variante pouvant être combinée avec les modes de réalisation précédemment décrits, tout ou partie des fils à l'intérieur de la gaine sont torsadés entre eux, de façon à réduire ainsi le champ magnétique émis. En effet, en plus des champs électriques dont la réduction est recherchée, les fils électriques émettent aussi des champs magnétiques lorsqu'ils transportent un courant fournissant une puissance électrique à un appareil. Il est intéressant de réduire ces champs magnétiques, et la demande existe pour cela, pour des raisons du même type que pour les champs électriques.

Le pas de torsade peut être de quelques dizaines de centimètres, par exemple de 20cm à 100cm et de préférence entre 40cm et 60cm. Il n'est pas nécessaire d'inclure le fil de terre dans cette torsade. Par exemple dans le cas de fils pour de l'alternatif monophasé (220V ou 110V), le fil de phase et le fil de neutre sont de préférence torsadés l'un avec l'autre sans inclure le fil de terre s'il existe. Par exemple dans le cas d'un triphasé, les trois fils de phase sont de préférence torsadés ensemble sans le fil de terre, possiblement avec le fil de neutre s'il existe.

La gaine peut ainsi être fournie et installée précâblée avec fils torsadés, ou les fils torsadés être fournis séparément et insérés dans la gaine avant ou après installation.

## Revendications

1. Gaine de protection à l'égard du rayonnement du champ électrique engendré par des câbles électriques (1, 2, 3) s'étendant à l'intérieur de la gaine, ladite gaine étant de nature cintrable et présentant une résistance à l'écrasement et étant prévue pour pouvoir recevoir des câbles électriques par insertion, au sens des types dénommés "ICTA" et "ICTL",
ladite gaine entourant ou étant destinée à entourer au moins un câble de neutre (1), un câble de terre (2) et un câble de phase (3) reliés au réseau de distribution électrique, et comprenant une couche extérieure (4) en matière plastique électriquement isolante qui recouvre une couche intérieure (5) en matière électriquement conductrice, des moyens étant prévus pour raccorder la couche (5) en matière électriquement conductrice à un conducteur électrique (7) destiné à être relié à la terre, **caractérisée en ce que** le conducteur (7), destiné à être relié à la terre, est un fil (7) tout ou en partie en matière conductrice s'étendant à l'intérieur de la gaine sur toute la longueur de celle-ci et qui est, sur au moins une partie de sa longueur et au moins en plusieurs points, en contact électrique avec la couche intérieure (5) en matière électriquement conductrice.

2. Gaine selon la revendication 1, **caractérisée en ce que** la couche (5) en matière électriquement conductrice est une feuille de métal conducteur.

3. Gaine selon la revendication 2, **caractérisée en ce que** ladite feuille est une feuille d'aluminium.

4. Gaine selon la revendication 1, **caractérisée en ce que** la couche (5) en matière électriquement conductrice est en polymère chargé de poudre conductrice.

5. Gaine selon la revendication 4, **caractérisée en ce que** la poudre conductrice est du graphite.

6. Gaine selon l'une des revendications 1 à 5, **caractérisée en ce que** le fil (7) est un fil métallique dépourvu de gaine isolante ou un fil en matière plastique électriquement conductrice.

7. Gaine selon la revendication 6, **caractérisée en ce que** le fil (7) comporte, à proximité d'au moins une des extrémités de la gaine, une pliure (13) conformée, lors de sa mise en oeuvre, pour obtenir un contact entre le fil (7) et la couche intérieure (5) en matière électriquement conductrice en au moins deux points opposés de la surface intérieure de la gaine.

8. Gaine selon l'une des revendications 1 à 5, **caractérisée en ce que** le fil (7a) est un fil revêtu extérieurement, tout ou partie, par une couche, suffisamment conductrice pour conduire le champ électrique mais pas le courant électrique, en polymère conducteur ou semi conducteur.

9. Gaine selon la revendication 8, **caractérisée en ce que** le fil (7a) comporte, à proximité d'au moins une des extrémités de la gaine, une pliure (13) conformée, lors de sa mise en oeuvre, pour obtenir un contact entre le fil et la couche intérieure (5) en polymère chargé de particules conductrices en au moins deux points opposés de la surface intérieure de la gaine.

10. Gaine selon l'une des revendications 8 ou 9, **caractérisée en ce que** le fil (7a) est le câble de terre s'étendant à l'intérieur de la gaine, mais dont le revêtement extérieur isolant est remplacé, tout ou partie, par une couche, suffisamment conductrice pour conduire le champ électrique mais pas le courant électrique, en polymère conducteur ou semi conducteur.

11. Gaine selon l'une des revendications 1 à 10, **caractérisée en ce qu'**elle est annelée extérieurement et intérieurement.

12. Gaine selon l'une des revendications 1 à 11, **caractérisée en ce qu'**elle comprend en outre des moyens de connexion amovibles pour raccorder la couche (5) en matière électriquement conductrice à un conducteur électrique (9) destiné à être relié à la terre, ces moyens comprenant une pince conductrice (8) pouvant s'accrocher à un anneau extérieur et/ou intérieur de la gaine pour être en contact avec la couche (5) en matière électriquement conductrice.

13. Gaine selon l'une des revendications 1 à 12, **caractérisée en ce qu'**elle comporte un manchon (10) pour raccorder les extrémités des deux tronçons de gaine, ce manchon (10) étant adapté pour s'engager sur les extrémités de ces deux tronçons et comportant sur sa surface intérieure des crans de retenue (11) pouvant s'engager entre deux anneaux extérieurs de chacun des deux tronçons, des moyens étant en outre prévus pour établir la liaison électrique entre les couches conductrices (5) des deux tronçons.

14. Gaine selon la revendication 13, **caractérisée en ce que** lesdits moyens comprennent un conducteur souple (12) reliant entre elles les couches conductrices (5) des deux tronçons.

## Patentansprüche

1. Schutzummantelung gegen Abstrahlung des elektrischen Feldes, welches durch elektrische Kabel (1, 2, 3) erzeugt wird, die im Inneren der Ummantelung verlaufen, wobei die Ummantelung biegsamer Art ist und eine Verformungsfestigkeit aufweist und zur Aufnahme von elektrischen Kabeln durch Einfügen ausgelegt ist, etwa vom Typ ringgewellter oder glatter, biegsamer, querelastischer Isolierkörper,
wobei die Ummantelung mindestens ein Neutralkabel (1), ein Erdungskabel (2) und ein stromführendes Kabel (3) umhüllt oder umhüllen kann, die mit dem Stromversorgungsnetz verbunden sind, und eine Außenschicht (4) aus elektrisch isolierendem Kunststoff umfasst, die über einer Innenschicht (5) aus elektrisch leitendem Material liegt, wobei Mittel vorgesehen sind, um die Schicht (5) aus elektrisch leitendem Material an einen elektrischen, zur Erdung bestimmten Leiter (7) anzuschließen, **dadurch gekennzeichnet, dass** es sich bei dem Leiter (7), der zur Erdung bestimmt ist, um eine Leitung (7) handelt, die ganz oder teilweise aus leitendem Material besteht, die im Inneren der Ummantelung über deren gesamte Länge verläuft, und die mindestens über einen Teil deren Länge und mindestens an mehreren Punkten mit der Innenschicht (5) aus elektrisch leitendem Material elektrisch verbunden ist.

2. Ummantelung nach Anspruch 1, **dadurch gekennzeichnet, dass** es sich bei der Schicht (5) aus elektrisch leitendem Material um eine leitfähige Metallfolie handelt.

3. Ummantelung nach Anspruch 2, **dadurch gekennzeichnet, dass** es sich bei der Folie um eine Aluminiumfolie handelt.

4. Ummantelung nach Anspruch 1, **dadurch gekennzeichnet, dass** es sich bei der Schicht (5) aus elektrisch leitendem Material um ein mit leitendem Pulver beladenes Polymer handelt.

5. Ummantelung nach Anspruch 4, **dadurch gekennzeichnet, dass** es sich bei dem leitenden Pulver um Graphit handelt.

6. Ummantelung nach einem der Ansprüche 1 bis 5, **dadurch gekennzeichnet dass** es sich bei der Leitung (7) um einen Metalldraht ohne isolierende Ummantelung oder um einen elektrisch leitfähigem Kunststoffdraht handelt.

7. Ummantelung nach Anspruch 6, **dadurch gekennzeichnet, dass** die Leitung (7) nahe zumindest einem der Enden der Ummantelung eine Faltung (13) aufweist, die bei ihrer Anbringung so ausgelegt ist, dass zwischen der Leitung (7) und der Innenschicht (5) aus elektrisch leitendem Material an mindestens zwei entgegengesetzten Punkten der Innenfläche der Ummantelung ein Kontakt hergestellt wird.

8. Ummantelung nach einem der Ansprüche 1 bis 5, **dadurch gekennzeichnet, dass** es sich bei der Leitung (7a) um eine Leitung handelt, die außenseitig ganz oder teilweise von einer Schicht aus leitendem oder halbleitendem Polymer umhüllt ist, die zum Leiten des elektrischen Feldes jedoch nicht des Stroms ausreichend leitfähig ist.

9. Ummantelung nach Anspruch 8, **dadurch gekennzeichnet, dass** die Leitung (7a) nahe zumindest einem der Enden der Ummantelung eine Faltung (13) aufweist, die bei ihrer Anbringung so ausgelegt ist, dass zwischen der Leitung und der Innenschicht (5) aus mit leitenden Partikeln beladenem Polymer an mindestens zwei entgegengesetzten Punkten der Innenfläche der Ummantelung ein Kontakt hergestellt wird.

10. Ummantelung nach einem der Ansprüche 8 oder 9, **dadurch gekennzeichnet, dass** es sich bei der Leitung (7a) um das Erdungskabel handelt, das im Inneren der Ummantelung verläuft, dessen isolierende Außenbeschichtung ganz oder teilweise durch eine Schicht aus leitendem oder halbleitendem Polymer ersetzt wird, die zum Leiten des elektrischen Feldes jedoch nicht des Stroms ausreichend leitfähig ist.

11. Ummantelung nach einem der Ansprüche 1 bis 10, **dadurch gekennzeichnet, dass** die Ummantelung außen und innen ringwellig ausgelegt ist.

12. Ummantelung nach einem der Ansprüche 1 bis 11, **dadurch gekennzeichnet, dass** die Ummantelung außerdem entfernbare Anschlussmittel zum Anschluss der Schicht (5) aus elektrisch leitendem Material an einen elektrischen, zur Erdung bestimmten Leiter (9) umfasst, wobei diese Mittel eine leitfähige Klemme (8) umfassen, die an einen Außen- und/oder Innenring der Ummantelung geklemmt werden kann, um mit der Schicht (5) aus elektrisch leitendem Material in Kontakt zu sein.

13. Ummantelung nach einem der Ansprüche 1 bis 12, **dadurch gekennzeichnet, dass** die Ummantelung zur Verbindung von den Enden zweier Teilstücke der Ummantelung eine Hülse (10) umfasst, wobei diese Hülse (10) so ausgelegt ist, dass sie auf die Enden dieser beiden Teilstücke der Ummantelung aufgeschoben werden kann und an ihrer Innenfläche Haltezapfen (11) aufweist, die zwischen zwei Außenringe beider Teilstücke der Ummantelung eingreifen können, wobei außerdem Mittel vorgesehen sind, um eine elektrische Verbindung zwischen den leitenden Schichten (5) der beiden Teilstücke herzustellen.

14. Ummantelung nach Anspruch 13, **dadurch gekennzeichnet, dass** diese Mittel einen biegsamen Leiter (12) umfassen, der die leitenden Schichten der beiden Teilstücke miteinander verbindet.

## Claims

1. A protective sheath against the radiation of the electric field generated by electric cables (1, 2, 3) extending inside the sheath, said sheath being of a bendable nature and exhibiting a crush resistance, and designed to be able to receive electrical cables by insertion, of the "ICTA" and "ICTL" types,
said sheath surrounding or being intended to surround at least one neutral cable (1), a ground cable (2) and a phase cable (3) connected to the electrical distribution network, and comprising an outer layer (4) of electrically insulating plastic material which covers an inner layer (5) of electrically conductive material, means being provided for connecting the layer (5) of electrically conductive material to an electric conductor (7) intended to be grounded, **characterized in that** the conductor (7), intended to be grounded, is a wire (7) entirely or partly made of conductive material extending inside the sheath over along the entire length thereof and which is, for at least one part of its length and at least at several points, in electrical contact with the inner layer (5) of electrically conductive material.

2. The sheath according to claim 1, **characterized in that** the layer (5) of electrically conductive material is a conductive metal sheet.

3. The sheath according to claim 2, **characterized in that** said sheet is an aluminium sheet.

4. The sheath according to claim 1, **characterized in that** the layer (5) of electrically conductive material is made of polymer loaded with conductive powder.

5. The sheath according to claim 4, **characterized in that** the conductive powder is graphite.

6. The sheath according to any one of claims 1 to 5, **characterized in that** the wire (7) is a metallic wire that does not have an insulating sheath or an electrically conductive plastic wire.

7. The sheath according to claim 6, **characterized in that** the wire (7) comprises, near at least one of the ends of the sheath, a fold (13) shaped, in its implementation, to obtain a contact between the wire (7) and the inner layer (5) of electrically conductive material at least at two opposite points of the inner surface of the sheath.

8. The sheath according to any one of claims 1 to 5, **characterized in that** the wire (7a) is a wire coated externally, entirely or partly, by a layer of conductive or semiconductor polymer, which is sufficiently conductive to conduct the electric field but not the electric current.

9. The sheath according to claim 8, **characterized in that** the wire (7a) comprises, near at least one of the ends of the sheath, a fold (13) shaped, in its implementation, to obtain a contact between the wire and the inner layer (5) of polymer loaded with conductive particles at least at two opposite points of the inner surface of the sheath.

10. The sheath according to any one of claims 8 or 9, **characterized in that** the wire (7a) is the ground cable extending inside the sheath, but whose outer insulating coating is replaced, entirely or partly, by a layer of conductive or semiconducting polymer, which is sufficiently conductive to conduct the electric field but not the electric current.

11. The sheath according to any one of claims 1 to 10, **characterized in that** it is corrugated externally and internally.

12. The sheath according to any one of claims 1 to 11, **characterized in that** it further comprises removable connection means for connecting the layer (5) of electrically conductive material to an electrical conductor (9) intended to be grounded, said means comprising a conductive clamp (8) capable of being hooked to an outer and/or inner ring of the sheath so as to be in contact with the layer (5) of electrically conductive material.

13. The sheath according to any one of claims 1 to 12, **characterized in that** it comprises a sleeve (10) for connecting the ends of the two sheath sections, this sleeve (10) being adapted to engage the ends of these two sections and comprising on its inner surface stop notches (11) capable of engaging between two outer rings of each of the two sections, means being furthermore provided for establishing the electrical connection between the conductive layers (5) of the two sections.

14. The sheath according to claim 13, **characterized in that** the said means comprise a flexible conductor (12) connecting the conductive layers (5) of the two sections.
